# EUROPEAN PATENT SPECIFICATION

(11) **EP 3 927 142 B1**
(45) Date of publication and mention of the grant of the patent: **21.06.2023**
(21) Application number: 19706957.8
(22) Date of filing: 20.02.2019
(51) Int. Cl.: A01D 34/84, A01G 3/06

(54) **HAND-HELD CUTTING DEVICE**
HANDSCHNEIDWERKZEUG
OUTIL DE COUPE PORTABLE

(43) Date of publication of application: 29.12.2021
(73) Proprietor: HUSQVARNA AB, 561 82 Huskvarna (SE)
(72) Inventor: RUDOLF, Peter, 89250 SENDEN (DE); JUNG, Petra, 98188 Merklingen (DE); KNOPF, Daniel, 89233 Neu-Ulm (DE)
(86) International application number: PCT/EP2019/054177
(87) International publication number: WO 2020/169190

(56) References cited:
- EP-A2- 0 976 313
- US-A1- 2002 042 997
- US-A1- 2004 088 867
- US-B1- 6 260 278

## Description

### TECHNICAL FIELD

The invention relates to a hand-held cutting device.

### BACKGROUND

A hand-held cutting device is a power tool configured to be operated by a user. The hand-held cutting device comprises a cutting means which is driven by a motor. Some types of hand-held cutting devices, such as e.g. some grass trimmers, may be set for using the cutting means in different cutting directions. Thus, during use of the hand-held cutting device a horizontal cutting direction of the cutting means and a vertical cutting direction of the cutting means are provided by changing a position of a portion of the hand-held cutting device comprising the cutting means.

US 6997268 discloses a trimmer comprising a cutting head housing a cutter, and a shaft for supporting the cutting head. A motor is provided for driving the cutter via an output shaft. The cutting head is connected to the shaft by a joint permitting the cutting head to be positioned with its cutter either substantially horizontal or substantially vertical.

EP 0976313 A2 discloses a trimmer where the shank is connected to the motor housing through a universal joint in order to enable an angular positioning relative to the motor shaft and a rotation of the shank about the longitudinal axis thereof.

### SUMMARY

It is an object of the invention to provide a versatile hand-held cutting device. It would be desirable to enable more than two cutting positions of a cutting head of a hand-held cutting device. In particular, it would be desirable to enable more than two cutting positions of a cutting head of a hand-held cutting device in a compact manner. To better address one or more of these concerns, a hand-held cutting device having the features defined in the independent claim is provided.

According to an aspect of the invention, the object is achieved by a hand-held cutting device comprising a handle portion, a shaft portion, a journaling member providing a first pivot axis, and a cutting head. The cutting head comprises a motor and an attachment means configured for connecting thereto a cutting means, the motor being arranged for driving the attachment means and the cutting means. The cutting head is connected to the shaft portion via the journaling member. The cutting head is pivotable about the first pivot axis between a first position and a second position in relation to the shaft portion. The journaling member provides a second pivot axis, the cutting head being pivotable about the second pivot axis between the first position and a third position in relation to the shaft portion.

Since the journaling member provides for the cutting head to be pivotable about the second pivot axis between the first and third positions in addition to the cutting head being pivotable about the first pivot axis between the first and second positions, the journaling member provides for the cutting head to be positioned in three different positions. This improves the versatility of a hand-held cutting device as a user of the hand-held cutting device is able to perform cutting operations with the cutting head in three different positions. Thus, the user does not have to angle the handle and shaft portions in order to reach the third position. As a result, the above mentioned object is achieved.

Moreover, since the first and second pivot axes are provided by the journaling member, the possibility to achieve three different positions of the cutting head is achieved by one component, the journaling member. Thus, a compact arrangement for achieving the three positions of the cutting head is provided.

The hand-held cutting device may be a device configured for performing cutting tasks in e.g. a garden or a park. Different kinds of cutting means may be utilised in the hand-held cutting device. That is, one or more different kinds of cutting means may be attached to the attachment means for performing cutting tasks with the hand-held cutting device. The cutting means may for instance be a rotatable cutting means, such as a cutting means comprising a cutting string or a cutting means comprising at least one cutting blade e.g. made from a plastic material.

The handle portion is configured for a user of the hand-held cutting device to hold and manoeuvre the hand-held cutting device during use thereof. The handle portion may comprise one or two hand grips for grasping by the user. The hand-held cutting device may be attachable to a harness carried by the user. Thus, the entire weight of the hand-held cutting device does not have to be supported by the hands and arms of the user.

The shaft portion extends between the handle portion and the cutting head.

The first and second pivot axes extend at an angle to each other in order to provide for the cutting head to be pivoted into the three different positions.

According to embodiments, the first pivot axis may cross the second pivot axis within the journaling member. In this manner, the journaling member may form a compact member, which may require less space than journaling means which would provide two pivot axes crossing each other at a distance from such journaling means.

According to embodiments, the journaling member may comprise an inner element and a first outer element, wherein the inner element comprises a first convex surface and the first outer element comprises a first concave surface, and wherein the first convex surface and the first concave surface form abutting journaling surfaces arranged in a first spherical plane. In this manner, journaling the inner element in the first outer element may be provided in a compact manner.

The inner element may be connected to, or form part of, the shaft portion. The first outer element may be connected to, or form part of, the cutting head. According to some embodiments, the first outer element may form an intermediate element arranged between the inner element and in the cutting head.

The first convex and concave surfaces may extend over only part of the first spherical plane.

According to embodiments, the first convex surface and the first concave surface forming abutting journaling surfaces may journal the inner element in the first outer element for pivoting the cutting head about the first pivot axis. In this manner, journaling the inner element in the first outer element for pivoting the cutting head about the first pivot axis may be provided in a compact manner.

According to embodiments, the cutting head may be releasably lockable in relation to the shaft portion in each of the first position, the second position, and the third position. In this manner, it may be ensured that the cutting head is securely positioned in each of the first position, the second position, and the third position. Moreover, only upon being actively released from a respective of the first position, the second position, and the third position, the cutting head may be pivoted into a different position.

According to embodiments, a centre of gravity of the cutting head may be positioned laterally of the first pivot axis when the cutting head is in the first position and the handle portion and shaft potion are held in a normal operating position, such that when released from the first position, gravity may initiate at least a partial rotation of the cutting head about the first pivot axis towards the second position. In this manner, gravity may assist a user of the hand-held cutting device for pivoting the cutting head about the first pivot axis. In some cases, the pivoting direction of the cutting head provided by the first pivot axis may be difficult to understand by the user of the hand-held cutting device. Releasing the cutting head from the first position and gravity initiating the rotation about the first pivot axis may indicate to the user the pivoting direction about the first pivot axis.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Figs. 1a - 1c illustrate a hand-held cutting device according to embodiments,
Figs. 2a and 2b illustrate first embodiments of a journaling member of a hand-held cutting device,
Figs. 3a - 3c illustrate a cutting head in its first and second positions as it is pivoted about a first pivot axis,
Figs. 4a and 4b illustrate the cutting head in its third position as it has been pivoted about a second pivot axis,
Fig. 4c illustrates embodiments of an alternative arrangement for releasably locking a cutting head in at least two positions,
Figs. 5a - 5e illustrate second embodiments of a journaling member of a hand-held cutting device, and
Figs. 6a - 6e illustrate third embodiments of a journaling member of a hand-held cutting device.

### DETAILED DESCRIPTION

Aspects and/or embodiments of the invention will now be described more fully. Like numbers refer to like elements throughout. Well-known functions or constructions will not necessarily be described in detail for brevity and/or clarity.

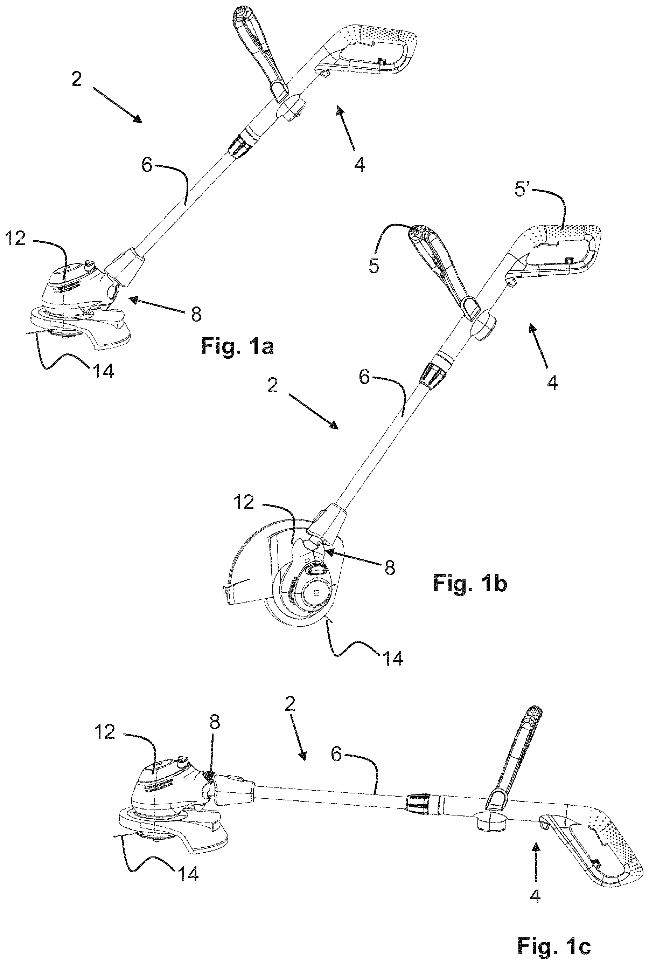

**Figs. 1a** - **1c** illustrate a hand-held cutting device 2 according to embodiments.

The hand-held cutting device 2 comprises a handle portion 4, a shaft portion 6, a journaling member 8, and a cutting head 12.

The handle portion 4 is configured for a user of the hand-held cutting device 2 to hold and manoeuvre the hand-held cutting device 2. In these embodiments, the handle portion 4 comprises two hand grips 5, 5' for grasping by the user, see **Fig.1b**. The shaft portion 6 extends from the handle portion 4 towards the cutting head 12. The shaft portion 6 may comprise one or more components connected to each other. A further alternative may be for the shaft portion 6 to be formed in one piece with the handle portion 6.

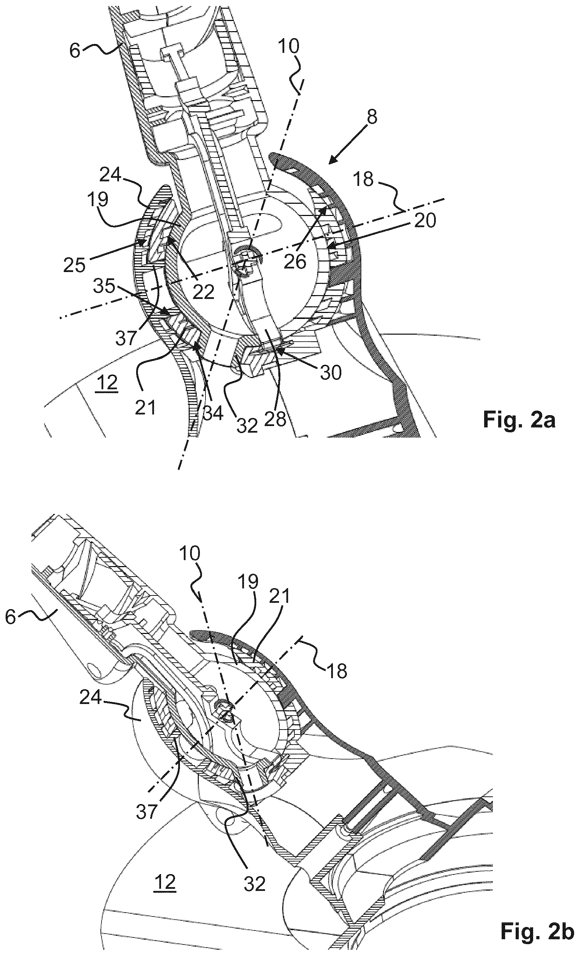

The journaling member 8 forms a connecting link between the shaft portion 6 and the cutting head 12. Thus, the journaling member 8 comprises one main component which is connected to the shaft portion 6 or which forms part of the shaft portion 6, and a further main component which is connected to the cutting head 12 or which forms part of the cutting head 12. The journaling member 8 may comprise further components as will be discussed below with reference to, **Figs. 2a** - **6e**. The journaling member 8 is configured for permitting the cutting head 12 to be pivoted in relation to the shaft portion 6 and the handle portion 4. The cutting head 12 is positionable in a first position, a second position, and a third position in relation to the shaft portion 6.

The cutting head 12 comprises a motor and an attachment means configured for connecting thereto a cutting means 14. That is, in the use of the hand-held cutting device 2, the cutting means 14 is connected to the attachment means for performing cutting tasks. The motor drives the attachment means and thus, the cutting means 14, e.g. to perform a rotating or reciprocating cutting motion in a known manner. In the illustrated embodiments, the cutting means 14 comprises a cutting string which is rotated and suitable for cutting e.g. grass, leaves, and thin branches.

In **Fig.1a** the cutting head 12 is shown positioned in the first position in relation to the shaft portion 6. During use of the hand-held cutting device 2, the first position corresponds to a normal cutting position of the cutting head 12. When a user holds the hand-held cutting device 2 by the handle portion 4, the cutting means 14 performs a cutting motion in a substantially horizontal plane. Cutting in a substantially horizontal plane may thus, be performed with the cutting head 12 in its first position.

In **Fig.1b** the cutting head 12 is shown positioned in the second position in relation to the shaft portion 6. During use of the hand-held cutting device 2, the second position corresponds to an edging position of the cutting head 12. When a user holds the hand-held cutting device 2 by the handle portion 4, the cutting means 14 performs a cutting motion in a substantially vertical plane. Cutting in a substantially vertical plane may thus, be performed with the cutting head 12 in its first position.

In **Fig.1c** the cutting head 12 is shown positioned in the third position in relation to the shaft portion 6. During use of the hand-held cutting device 2, the third position corresponds to a so-called shrubbing position of the cutting head 12. When a user holds the hand-held cutting device 2 by the handle portion 4, the cutting means 14 performs a cutting motion in a substantially horizontal plane. Cutting in a substantially horizontal plane may thus, be performed with the cutting head 12 in its third position. When the cutting head 12 is positioned in the third position, the horizontal cutting plane extents substantially in parallel with an extension of the shaft portion 6, or at least at a more acute angle to the extension of the shaft portion 6 than when the cutting head 12 is positioned in the first position. Thus, a user may perform horizontal cutting tasks higher up when the cutting head 12 is positioned in the third position than when it is positioned in the first position. Also, when the cutting head 12 is positioned in the third position, reaching and cutting underneath an obstacle, such as a shrubbery, low hanging branches, or garden furniture is facilitated.

**Figs. 2a and 2b** illustrate first embodiments of a journaling member 8 of a hand-held cutting device. The journaling member 8 is shown in a cross-section. The journaling member 8 may be a journaling member of the hand-held cutting device 2 shown in **Figs. 1a** - **1c**. Accordingly, in the following reference is also made to **Figs. 1a** - **1c**.

In **Figs. 2a and 2b** part of the shaft portion 6 and of the cutting head 12 are shown. The cutting head 12 is connected to the shaft portion 6 via the journaling member 8.

The journaling member 8 provides a first pivot axis 10. The cutting head 12 is pivotable about the first pivot axis 10 between the first position and the second position in relation to the shaft portion 6. The journaling member 8 provides a second pivot axis 18. The cutting head 12 is pivotable about the second pivot axis 18 between the first position and the third position in relation to the shaft portion 6.

The first and second pivot axes 10, 18 extend at an angle to each other in order to provide for the cutting head 12 to reach the first, second, and third positions by pivoting about the respective first and second pivot axes 10, 18. The first pivot axis 10 crosses the second pivot axis 18 within the journaling member 8. Thus, the journaling member 8 may be held compact.

The journaling member 8 comprises an inner element 19 and a first outer element 21. The inner element 19 comprises a first convex surface 20 and the first outer element 21 comprises a first concave surface 22. The first convex surface 20 and the first concave surface 22 form abutting journaling surfaces arranged in a first spherical plane. In this manner, the inner element 19 is journaled in the first outer element 21.

More specifically, the first convex surface 20 and the first concave surface 22 forming the abutting journaling surfaces, journal the inner element 19 in the first outer element 21 for pivoting the cutting head 12 about the first pivot axis 10.

None of the first convex surface 20 and the first concave surface 22 needs to extend over the entire first spherical plane. Still, by providing abutment between the first convex surface 20 and the first concave surface 22 in a number of positions along the first spherical plane, the journaling of the inner element 19 in the first outer element 21 may be provided. Accordingly, one or both of the first convex surface 20 and the first concave surface 22 may comprise a number of partial surface portions extending along the first spherical plane. In between the partial surface portions recesses may be formed. Should dust and/or dirt seek its way in between the first convex and concave surfaces 20, 22, the dust and/or dirt will collect in the recesses and will not obstruct journaling of the inner element 19 in the first outer element 21.

In these embodiments, the journaling member 8 comprises a second outer element 24. The first outer element 21 comprises a second convex surface 25 and the second outer element 24 comprise a second concave surface 26 forming abutting journaling surfaces arranged in a second spherical plane. The second spherical plane is arranged outside and concentrically with the first spherical plane. In this manner, the first outer element 21 is journalled in the second outer element 24.

More specifically, the second convex surface 25 and the second concave surface 26 forming the abutting journaling surfaces, journal the first outer element 21 in the second outer element 24 for pivoting the cutting head 12 about the second pivot axis 18.

Moreover, the inner element 19 is indirectly journaled in the second outer element 24. That is, the inner element 19 is journalled in the second outer element 24 via the first outer element 21. The first outer element 21 forms an intermediate element between the inner element 19 and the second outer element 24.

In analogy with the first convex and first concave surfaces 20, 22, none of the second convex surface 25 and the second concave surface 26 needs to extend over the entire second spherical plane. By providing abutment between the second convex surface 25 and the second concave surface 26 in a number of positions along the first spherical plane, the journaling of the first outer element 21 in the second outer element 24 may be provided. Accordingly, one or both of the second convex surface 25 and the second concave surface 26 may comprise a number of partial surface portions extending in the second spherical plane. Again, dust and/or dirt may be collected in recesses between the partial surface portions thus, not obstructing journaling of the first outer element 21 in the second outer element 24.

The first pivot axis 10 crosses the second pivot axis 18 within the inner element 19.

In these embodiments, the inner element 19 is provided with a journaling protrusion 32 extending from the first convex surface 20 and the first outer element 21 is provided with a journaling opening 34. The journaling protrusion 32 extends into the journaling opening 34 to provide the first pivot axis 10 for pivoting of the cutting head 12 between the first and second positions. In this manner, the direction of the first pivot axis 10 may be defined. By arranging the journaling protrusion 32 and the journaling opening 34 at a particular position along the first spherical plane, the direction of the first pivot axis 10 may be defined. Since the journaling protrusion 32 extends into the journaling opening 34, the degree of freedom of the abutting journaling surfaces of the inner element 19 in the first outer element 21 is limited to pivoting the cutting head 12 about the first pivot axis 10.

According to alternative embodiments, instead the inner element 19 may be provided with a journaling opening and the first outer element 21 may be provided with a journaling protrusion extending from the first concave surface 22, the journaling protrusion extending into the journaling opening to provide the first pivot axis 10 for pivoting of the cutting head 12 between the first and second positions. This will provide the same kind of pivoting limitation of the cutting head about the first pivot axis 10 as discussed above.

In these embodiments, the first outer element 21 is provided with a further journaling opening 35 and the second outer element 24 is provided with a further journaling protrusion 37 extending from the second concave surface 26. The further journaling protrusion 37 extends into the further journaling opening 35 to provide the second pivot axis 18 for pivoting of the cutting head 12 between the first and third positions. In this manner, the direction of the second pivot axis 18 may be defined. By arranging the further journaling protrusion 37 and the further journaling opening 35 at a particular position along the second spherical plane, the direction of the second pivot axis 18 may be defined. Since the further journaling protrusion 37 extends into the further journaling opening 35, the degree of freedom of the abutting journaling surfaces of the first outer element 21 in the second outer element 24 is limited to pivoting the cutting head 12 about the second pivot axis 18.

According to alternative embodiments, instead the first outer element 21 may be provided with a further journaling protrusion extending from the second convex surface 25 and the second outer element 24 may be provided with a further journaling opening, the further journaling protrusion extending into the further journaling opening to provide the second pivot axis 18 for pivoting of the cutting head 12 between the first and third positions. This will provide the same kind of pivoting limitation of the cutting head about the second pivot axis 18 as discussed above.

In the embodiments of **Figs. 2a and 2b** each of the inner element 19, the first outer element 21, and the second outer element 24 comprises at least two portions which are connected to each other. Thus, in **Figs. 2a and 2b** the different portions of the inner element 19, the first outer element 21, and the second outer element 24 are indicated with different hatchings.

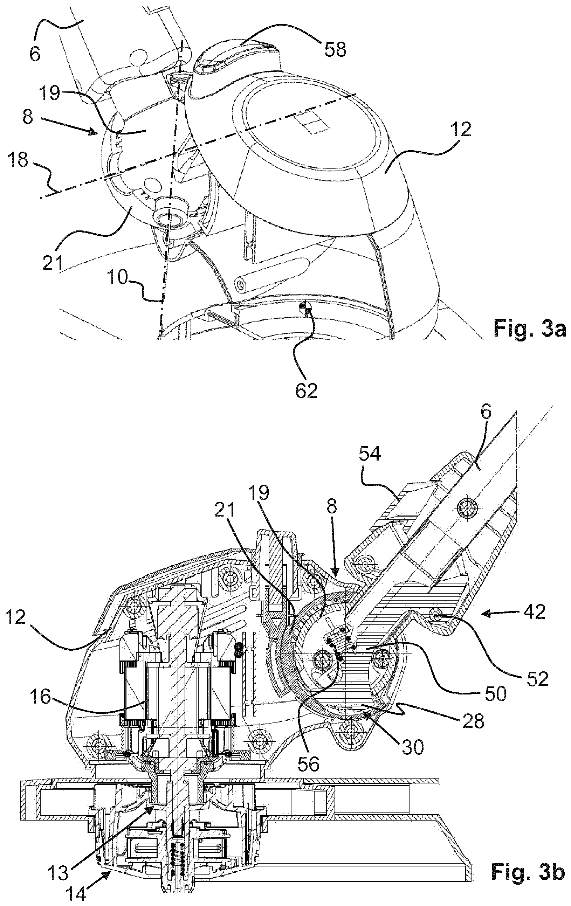

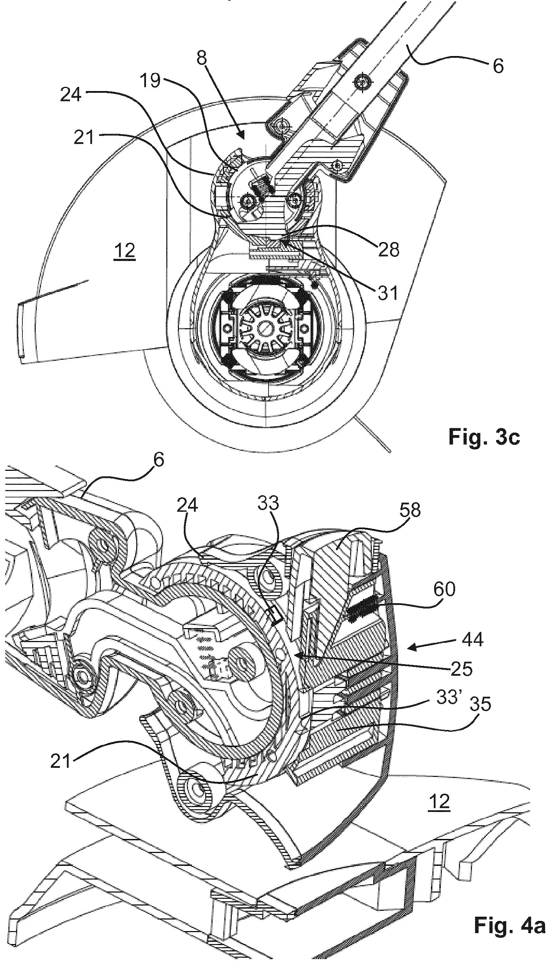

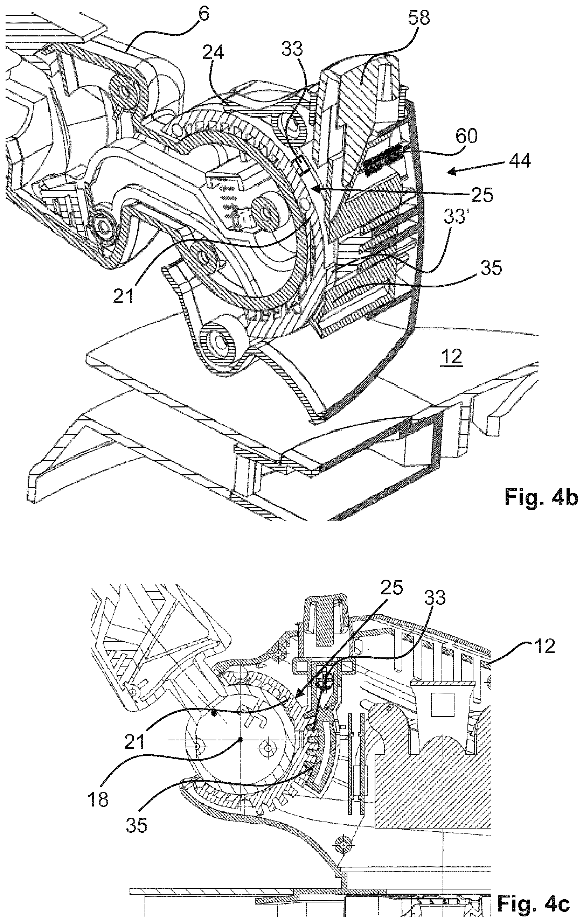

With reference to **Figs. 2a** - **4b** the first embodiments of the journaling member 8 will be discussed in more detail. **Figs. 3a** - **3c** illustrate the cutting head 12 in its first and second positions as it is pivoted about the first pivot axis 10. **Fig. 3a** shows the cutting head 12 with parts thereof removed. **Figs. 3b** **and** **3c** show cross-sections through part of the cutting head 12 and the shaft portion 6. **Figs. 4a** **and** **4b** illustrate the cutting head 12 in its third position as it has been pivoted about the second pivot axis 18. **Figs. 4a** **and** **4b** show cross-sections through part of the cutting head 12 and the shaft portion 6.

The cutting head 12 is releasably lockable in relation to the shaft portion 6 in each of the first position, the second position, and the third position. Thus, the cutting head 12 is securely positioned in each of the first position, the second position, and the third position during use of the hand-held cutting device.

In **Figs. 2a****,** **3b****, and** **3c** embodiments of an arrangement for releasably locking the cutting head 12 in relation to the shaft portion 6 in the first and second positions are shown. According to these embodiments, the hand-held cutting device 2 comprises a protruding member 28 arranged partially inside the inner element 19 and extending partially out of the inner element 19. The first outer element 21 is provided with a first groove 30 and a second groove 31. The protruding member 28 is configured for engaging with the first groove 30 for releasably locking the cutting head 12 in the first position, as illustrated in **Figs. 2a, 2b****, and** **3b****,** and for engaging with the second groove 31 for releasably locking the cutting head 12 in the second position, as illustrated in **Fig. 3c**.

More specifically, in **Figs. 2a, 2b** **and** **3b** the cutting head 12 is positioned in its first position. The protruding member 28 is engaged with the first groove 30. Thus, the inner element 19 is locked in relation to the first outer element 21. Accordingly, the cutting head 12 is locked in relation to the shaft portion 6 to be prevented from pivoting about the first axis 10. In **Fig. 3c** the cutting head 12 is positioned in its second position. The protruding member 28 is engaged with the second groove 31. Again, the inner element 19 is locked in relation to the first outer element 21 and the cutting head 12 is locked in relation to the shaft portion 6 to be prevented from pivoting about the first axis 10.

In **Figs. 4a** **and** **4b** embodiments of an arrangement for releasably locking the cutting head 12 in relation to the shaft portion 6 in the first and third positions are shown. According to these embodiments, the first outer element 21 at the second convex surface 25 is provided with at least two protrusions 33, 33' and/or recesses, wherein the cutting head 12 comprises an engagement member 35, and wherein the engagement member 35 is configured for engaging with a first 33 of the at least two protrusions 33, 33' and/or recesses for releasably locking the cutting head 12 in the first position and for engaging with a second 33' of the at least two protrusions 33, 33' and/or recesses for releasably locking the cutting head 12 in the third position, as illustrated in **Fig. 4b**.

More specifically, the engagement member 35 and the second outer element 24 are rotationally fixed in relation to each other and the cutting head 12. In **Figs. 4a** **and** **4b** the cutting head 12 is positioned in its third position. In **Fig. 4b** the engagement member 35 is engaged with the second protrusion 33'. Thus, the first outer element 21 is locked in relation to the second outer element 24. Accordingly, the cutting head 12 is locked in relation to the shaft portion 6 to be prevented from pivoting about the second axis 18. In **Fig. 4a** the engagement member 35 has been released from engagement with the second protrusion 33'. Thus, the first outer element 21 is pivotable in relation to the second outer element 24 about the second axis 18. Accordingly, the cutting head 12 is pivotable back to its first position. When the cutting head 12 is in its first position after having been pivoted about the second axis 18, the engagement member 35 is engaged with the first protrusion 33.

In the embodiments shown in **Figs. 4a** **and** **4b** two protrusions 33, 33' are provided at the second convex surface 25 and the engagement member 35 is configured for engaging with the protrusions 33, 33'. According to alternative embodiments, the second convex surface 25 is instead provided with at least two recesses and the engagement member 35 is configured for engaging with the recesses in a corresponding manner.

Referring to **Figs. 2a** - **4b**, the first position of the cutting head 12 is one lockable position of the cutting head 12 common for pivoting about both the first and second axes 10, 18. From the first position, pivoting of the cutting head 12 about the first axis 10 towards the second position is possible when the protruding member 28 is released from the first groove 30. Whereas pivoting of the cutting head 12 about the second axis 18 from the first position towards the third position is possible when the engagement member 35 is released from the first protrusion 33.

In these embodiments, two separate mechanisms are provided for the releasable locking of the cutting head 12 in the first, second, and third position, respectively.

The protruding member 28 is manoeuvrable by a user of the hand-held cutting device 2 via a first mechanism 42 arranged at least partially in the shaft portion 6, see **Fig. 3b**. Thus, the protruding member 28 may be released from locking engagement with one of the first and second grooves 30, 31 utilising the first mechanism 42.

More specifically, the first mechanism 42 comprises a lever 50 which is pivotable about a pivot point 52. At one end of the lever 50 the protruding member 28 is provided. The other end of the lever 50 is connected to a first pushbutton 54 arranged on the shaft portion 6. When a user of the hand-held cutting device pushes the first pushbutton 54, the protruding member 28 is moved in an inward direction within the inner element 19. Thus, the protruding member 28 is released from its engagement with the first or second groove 30, 31. A spring 56 is provided for biasing the protruding member 28 in an outward direction from the inner element 19. Thus, the protruding member 28 is moved into locking engagement with the first or second groove 30, 31 when pivoting of the cutting head 12 about the first axis 10 reaches the first or second position, respectively.

The engagement member 35 is manoeuvrable by a user of the hand-held cutting device 2 via a second mechanism 44 arranged in the cutting head 12. In this manner, the engagement member 35 may be released from locking engagement with one of the at least two protrusions 33, 33' and/or recesses utilising the second mechanism 44, see **Figs. 4a** **and** **4b****.**

More specifically, the second mechanism 44 comprises a second pushbutton 58. The second pushbutton 58 and the engagement member 35 abut against each other along an inclined plane. The engagement member 35 is biased, e.g. by means of a spring 60, towards a position, in which it engages with one of the at least two protrusions 33, 33' and/or recesses. This is the position of the engagement member 35 shown in **Fig. 4b**. When a user of the hand-held the cutting device pushes the second pushbutton 58, the second pushbutton 58 slides along the engagement member 35 along the inclined plane and moves the engagement member 35 into a position out of engagement with one of the at least two protrusions 33, 33' and/or recesses. This is the position of the engagement member 35 shown in **Fig. 4a**.

Referring to **Fig. 3a**, a centre of gravity 62 of the cutting head 12 is positioned laterally of the first pivot axis 10 when the cutting head 12 is in the first position and the handle portion and shaft potion 6 are held in a normal operating position, i.e. as shown in **Fig. 3a**. Thus, when released from the first position, by pushing the pushbutton 54, see **Fig. 3b**, gravity will initiate at least a partial rotation of the cutting head 12 about the first pivot axis 10 towards the second position. In this manner, gravity will cause the cutting head 12 to pivot downwardly about the first pivot axis 10. The user of the hand-held cutting device may assist in completing the pivoting about the first pivot axis 10 into the second position. As discussed above, the cutting head 12 may be locked in its second position.

As mentioned above, and shown in more detail in **Fig. 3b**, the cutting head 12 comprises a motor 16 and an attachment means 13 configured for connecting thereto a cutting means 14. The motor 16 is arranged for driving the attachment means 13 and the cutting means 14. In these embodiments, the motor 16 is arranged to drive the cutting means 14 in a rotating motion.

**Fig. 4c** illustrates embodiments of an alternative arrangement for releasably locking the cutting head 12 in relation to the shaft portion 6 in the first and third positions. Again, the first outer element 21 at the second convex surface 25 is provided with at least two protrusions/recesses 33, and the cutting head 12 comprises an engagement member 35 configured for releasable engagement with the protrusions/recesses 33. In **Fig. 4c** the cutting head 12 is shown in its first position.

In these embodiments, the cutting head 12 may be positioned in a number of intermediate positions arranged between the first and third positions as the cutting head 12 is pivoted about the second pivot axis 18. The more than two protrusions/recesses 33 provide for the engagement member 35 to engage therewith in the intermediate positions. The first and third positions may form end positions for the cutting head 12 in its rotation about the second pivot axis 18. The intermediate positions may be utilised for adapting the angle of the cutting head 12 to the height of the user of the hand-held cutting device 2, e.g. for cutting in parallel with a surface the user is standing on.

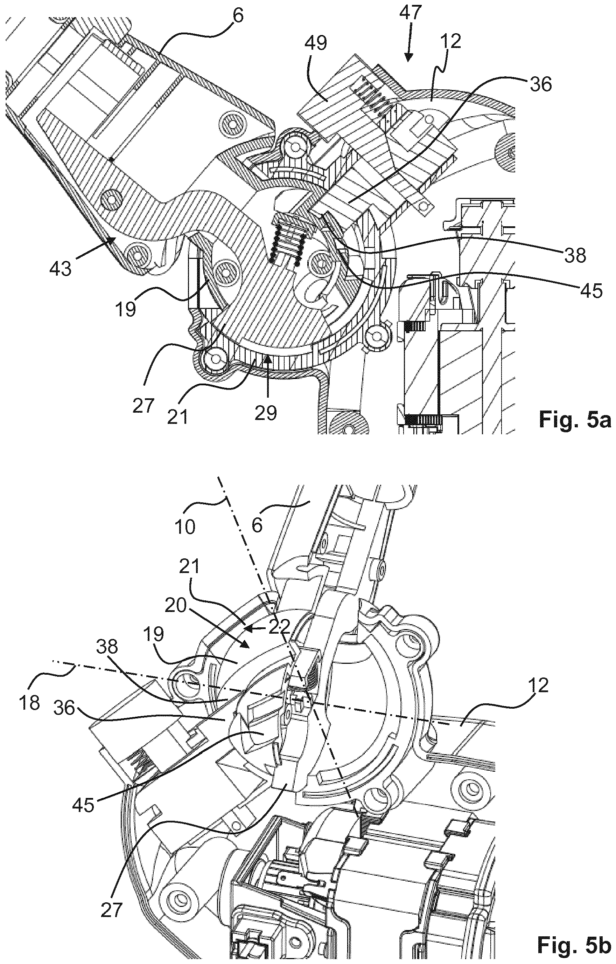

**Figs. 5a** - **5e** illustrate second embodiments of a journaling member 8 of a hand-held cutting device. **Figs. 5a** - **5e** also show part of the shaft portion 6 and of the cutting head 12 of the hand-held cutting device. The cutting head 12 is connected to the shaft portion 6 via the journaling member 8. The journaling member 8 is shown in various cross-sections and in one view with parts of the shaft portion 6, the journaling member 8, and the cutting head 12 removed. The journaling member 8 may be a journaling member of the hand-held cutting device 2 shown in **Figs. 1a - 1c****.** Accordingly, in the following reference is also made to **Figs. 1a - 1c****.**

These second embodiments of the journaling member 8 resemble in many aspects thejournaling member 8 of the first embodiments discussed above with reference to Figs. 2a -4b. Accordingly, in the following mainly the differentiating features of the second embodiments will be discussed.

Again, the journaling member 8 provides a first pivot axis 10, the cutting head 12 being pivotable about the first pivot axis 10 between the first position and the second position in relation to the shaft portion 6. The journaling member 8 provides a second pivot axis 18, the cutting head 12 being pivotable about the second pivot axis 18 between the first position and the third position in relation to the shaft portion 6. The first pivot axis 10 crosses the second pivot axis 18 within the journaling member 8.

Again, the journaling member 8 comprises an inner element 19 and a first outer element 21. The inner element 19 comprises a first convex surface 20 and the first outer element 21 comprises a first concave surface 22. The first convex surface 20 and the first concave surface 22 form abutting journaling surfaces arranged in a first spherical plane.

The main difference between these second embodiments of the journaling member 8 and the first embodiments discussed above with reference to **Figs. 2a** - **4b** is that the journaling member 8 of the second embodiments does not comprise a second outer element.

Again, the first convex surface 20 and the first concave surface 22 forming the abutting journaling surfaces, journal the inner element 19 in the first outer element 21 for pivoting the cutting head 12 about the first pivot axis 10. In these embodiments also, the first convex surface 20 and the first concave surface 22 forming abutting the journaling surfaces, journal the inner element 19 in the first outer element 21 for pivoting about the second pivot axis 18. In this manner, again, a compact journaling member 8 for pivoting the cutting head 12 about the first and second axes 10, 18 is provided.

As discussed above with reference to the first embodiments, the first convex surface 20 and the first concave surface 22 need not extend over the entire first spherical plane. One or both of the first convex surface 20 and the first concave surface 22 may comprise a number of partial surface portions extending in the first spherical plane.

In the first embodiments journaling protrusions and openings are provided for defining the directions of the first and second pivot axes. In these second embodiments instead, track and path followers, a guiding track, and a guiding path are provided for defining the directions of the first and second pivot axes 10, 18, as will now be discussed.

In these embodiments, the hand-held cutting device 2 comprises a path follower 36 extending from the first outer element 21 towards the inner element 19. The inner element 19 is provided with a first guiding path 38. The path follower 36 and the first guiding path 38 are configured for interacting with each other for guiding a pivoting of the cutting head 12 about the first pivot axis 10 between the first and second positions. In this manner, the direction of the first pivot axis 10 may be defined.

More specifically, the first guiding path 38 extends along the first convex surface 20 of the inner element 19 in a direction perpendicularly to the first axis 10. The first guiding path 38 has a circumferential extension, and its ends define the first and second positions of the cutting head 12. The path follower 36 engages with the first guiding path 38. Thus, pivoting of the inner element 19 in relation to the first outer element 21 is guided to be performed about the first axis 10. Accordingly, due to the engagement between path follower 36 and the first guiding path 38, the degree of freedom of the abutting journaling surfaces of the inner element 19 in the first outer element 21 is limited to pivoting the cutting head 12 about the first pivot axis 10.

In the illustrated embodiments, the first guiding path 38 forms a groove in the inner element 19 and the path follower 36 extends into the groove. However, the term guiding path also encompasses a circumferentially extending protrusion on the inner element 19. Of course, in this case the path follower is configured to engage with the protrusion.

In these embodiments, the hand-held cutting device 2 comprising a track follower 27 arranged partially inside the inner element 19 and extending partially out of the inner element 19, wherein the first outer element 21 is provided with a guiding track 29. The track follower 27 and the guiding track 29 are configured for interacting with each other for guiding a pivoting of the cutting head 12 about the second pivot axis 18 between the first and third positions. In this manner, the direction of the second pivot axis 18 may be defined.

More specifically, the guiding track 29 extends along the first concave surface 22 of the first outer element 21 in a direction perpendicularly to the second axis 18. The guiding track 29 has a circumferential extension, and its ends define the first and third positions of the cutting head 12. The track follower 27 engages with the guiding track 29. Thus, pivoting of the inner element 19 in relation to the first outer element 21 is guided to be performed about the second axis 18. Accordingly, due to the engagement between the track follower 27 and the guiding track 29, the degree of freedom of the abutting journaling surfaces of the inner element 19 in the first outer element 21 is limited to pivoting the cutting head 12 about the second pivot axis 18.

Again, the cutting head 12 is releasably lockable in relation to the shaft portion 6 in each of the first position, the second position, and the third position. In these embodiments, the path follower 36 is releasably lockable at respective ends of the first guiding path 38, i.e. when the cutting head 12 is in the first and second position, respectively. The track follower 27 is releasably lockable in the guiding track 29 and in a first recess 41, i.e. when the cutting head is in the first and third position, respectively.

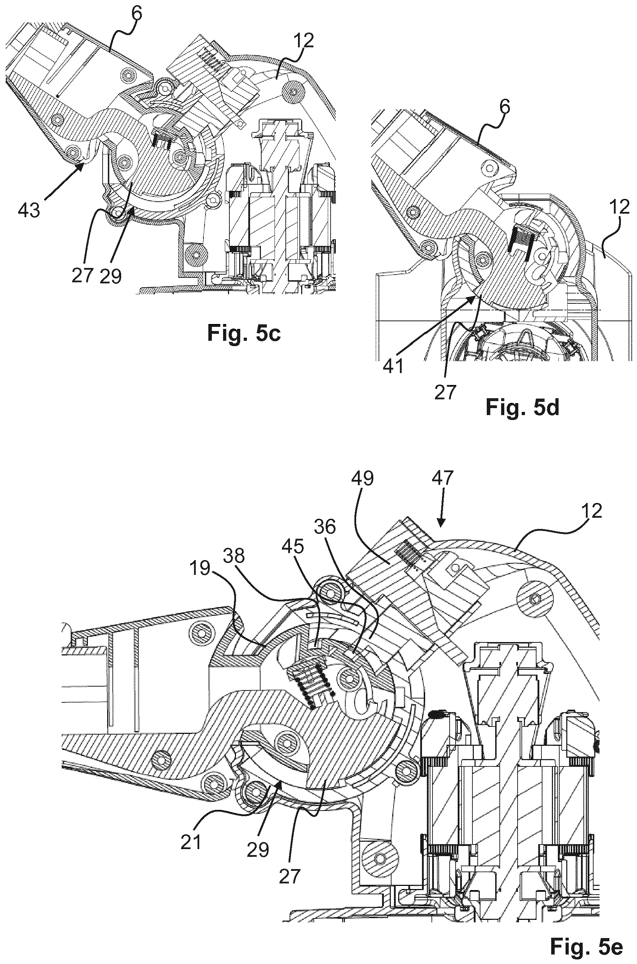

In **Figs. 5a** **and** **5c** the cutting head 12 is shown in its first position. In **Figs. 5b****, and** **5d** the cutting head 12 is shown in its second position. As discussed above, the path follower 36 guides pivoting of the cutting head 12 about the first pivot axis 10. In order to permit such pivoting from the first position towards the second position, the track follower 27 has to be released from its engagement with the guiding track 29. The engagement between the track follower 27 and the guiding track 29 is shown in **Fig. 5a**. In **Fig. 5c** the track follower 27 has been released from the guiding track 29 and accordingly, the cutting head 12 is pivotable towards its second position. In **Fig. 5d** the cutting head 12 is shown in its second position and the track follower 27 has engaged with a first recess 41 in the first outer element 21. Thus, the cutting head 12 is locked in its second position. In a corresponding manner the track follower 27 is released from its engagement with the first recess 41 when the cutting head is to be pivoted back to its first position.

The track follower 27 is manoeuvrable by a user of the hand-held cutting device 2 via a first manoeuvring mechanism 43 arranged at least partially in the shaft portion 6, see **Figs. 5a** **and** **5c**.

The first manoeuvring mechanism 43 functions in a manner corresponding to that of the first mechanism 42 discussed above with reference to **Fig. 3b**, i.e. comprising a lever which upon actuation by the user pivots the track follower 27 inwardly into the inner element 19 in order to release the cutting head 12. The lever is biased such that the track follower 27 pivots outwardly from the inner element 19.

In **Figs. 5a** **and** **5e** the cutting head 12 is shown in its respective first and third positions. As discussed above, the track follower 27 guides pivoting of the cutting head 12 about the second pivot axis 18. In order to permit such pivoting from the first position towards the third position, the path follower 36 has to be released from its engagement with the first guiding path 38. The engagement between the path follower 36 and the first guiding path 38 is shown in **Fig.5a**. In **Fig. 5e** the path follower 36 has been released from the first guiding path 38 and the cutting head 12 has been pivoted to its third position. The path follower 36 is configured to engage with a second recess 45 in the inner element 19 in order to lock the cutting head 12 in the third position. In a corresponding manner the path follower 36 is released from its engagement with the second recess 45 when the cutting head 12 is to be pivoted back to its first position.

The path follower 36 is movable in a direction comprising a normal direction of the first spherical plane. In this manner, the path follower 36 may be released from engagement with the first guiding path 38.

The path follower 36 may be manoeuvrable via a second manoeuvring mechanism 45. That is, the second manoeuvring mechanism 47 is configured to move the path follower 36 in the direction comprising the normal direction of the first spherical plane. The second manoeuvring mechanism 47 moves the path follower 36 in an outward direction from the first spherical plane. The second manoeuvring mechanism 47 comprises a pushbutton 49, which via an inclined plane moves the path follower 36 out of engagement with the first guiding path 38 and the second recess 45 when the pushbutton 49 is actuated by a user. The path follower 36 and the pushbutton 49 are biased towards positions corresponding to an engaged position of the path follower 36.

Thus, in these embodiments, two separate manoeuvring mechanisms 43, 47 are provided for the releasable locking of the cutting head 12 in the first, second, and third position, respectively.

As in the first embodiments, the centre of gravity of the cutting head 12 is positioned laterally of the first pivot axis 10 when the cutting head 12 is in the first position and the handle portion and shaft potion 6 are held in a normal operating position, i.e. as shown in **Fig. 5a**. Thus, again gravity assists pivoting of the cutting head 12 towards the second position when a user actuates the first manoeuvring mechanism 43.

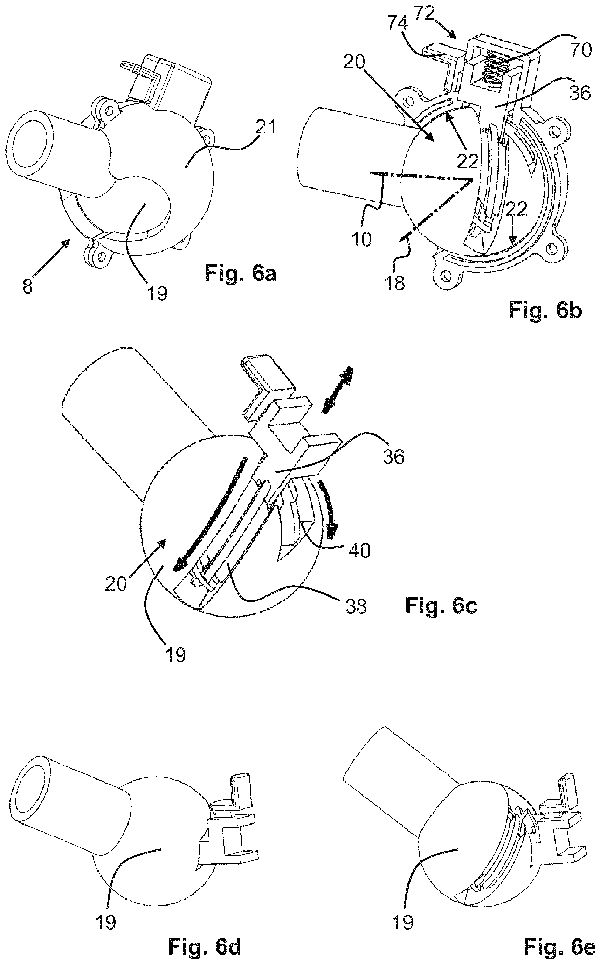

**Figs. 6a** - **6e** illustrate third embodiments of a journaling member 8 of a hand-held cutting device. In **Figs. 6a** - **6e** the shaft portion and of the cutting head of the hand-held cutting device have been omitted. Again, the cutting head is connected to the shaft portion via the journaling member 8. The journaling member 8 is shown in various views and with parts of the journaling member 8 removed. The journaling member 8 may be a journaling member of the hand-held cutting device 2 shown in **Figs. 1a - 1c****.** Accordingly, in the following reference is also made to **Figs. 1a** - **1c****.**

These third embodiments of the journaling member 8 resemble in many aspects the journaling member 8 of the first and second embodiments discussed above with reference to **Figs. 2a** - **5e**. Accordingly, in the following mainly the differentiating features of the third embodiments will be discussed.

Again, the journaling member 8 comprises an inner element 19 and a first outer element 21. The inner element 19 comprises a first convex surface 20 and the first outer element 21 comprises a first concave surface 22. The first convex surface 20 and the first concave surface 22 form abutting journaling surfaces arranged in a first spherical plane.

As in the previous embodiments, the inner element 19 may be connected to, or form part of, the shaft portion and the first outer element 21 may be connected to, or form part of, the cutting head. Alternatively, this may be the other way around.

Again, the journaling member 8 provides a first pivot axis 10, the cutting head being pivotable about the first pivot axis 10 between its first and the second positions in relation to the shaft portion. The journaling member 8 provides a second pivot axis 18, the cutting head being pivotable about the second pivot axis 18 between the first and third positions in relation to the shaft portion. The first pivot axis 10 crosses the second pivot axis 18 within the journaling member 8.

Again, one difference between these third embodiments of the journaling member 8 and the first embodiments discussed above with reference to **Figs. 2a** - **4b** is that the journaling member 8 of the second embodiments does not comprise a second outer element.

Again, the first convex surface 20 and the first concave surface 22 forming the abutting journaling surfaces, journal the inner element 19 in the first outer element 21 for pivoting the cutting head 12 about the first pivot axis 10. In these embodiments also, the first convex surface 20 and the first concave surface 22 forming the abutting the journaling surfaces, journal the inner element 19 in the first outer element 21 for pivoting about the second pivot axis 18. In this manner, again, a compact journaling member 8 for pivoting the cutting head 12 about the first and second axes 10, 18 is provided.

As discussed above, the first convex surface 20 and the first concave surface 22 need not extend over the entire first spherical plane. One or both of the first convex surface 20 and the first concave surface 22 may comprise a number of partial surface portions extending in the first spherical plane.

Instead of providing journaling protrusions and openings as in first embodiments for defining the directions of the first and second pivot axes, and instead of providing a track follower and a guiding track for defining the direction of the second pivot axis, a second guiding path is provided for defining the direction of the second pivot axis 18.

Accordingly, again, the hand-held cutting device 2 comprises a path follower 36 extending from the first outer element 21 towards the inner element 19. The inner element 19 is provided with a first guiding path 38. The path follower 36 and the first guiding path 38 are configured for interacting with each other for guiding a pivoting of the cutting head 12 about the first pivot axis 10 between the first and second positions. In this manner, the direction of the first pivot axis 10 may be defined. See further above with reference to the second embodiments and **Figs. 5a** - **5e****.**

More specifically, the first guiding path 38 extends along the first convex surface 20 of the inner element 19 in a direction perpendicularly to the first axis 10. The first guiding path 38 has a circumferential extension, and its ends define the first and second positions of the cutting head 12. The path follower 36 engages with the first guiding path 38. Thus, pivoting of the inner element 19 in relation to the first outer element 21 is guided to be performed about the first axis 10. Accordingly, due to the engagement between path follower 36 and the first guiding path 38, the degree of freedom of the abutting journaling surfaces of the inner element 19 in the first outer element 21 is limited to pivoting the cutting head 12 about the first pivot axis 10.

In the illustrated embodiments, the first guiding path 38 forms a groove in the inner element 19 and the path follower 36 extends into the groove. However, the term guiding path also encompasses a circumferentially extending protrusion on the inner element 19. Of course, in this case the path follower is configured to engage with the protrusion.

In these embodiments, the inner element 19 is provided with a second guiding path 40. The path follower 36 and the second guiding path 40 are configured for interacting with each other for guiding a pivoting of the cutting head 12 about the second pivot axis 18 between the first and third positions. In this manner, the direction of the second pivot axis 18 may be defined.

More specifically, the second guiding path 40 extends along the first convex surface 20 of the inner element 19 in a direction perpendicularly to the second axis 18. The first and second guiding paths 38, 40 extend at an angle to each other. At a position on the first convex surface 20, corresponding to the first position of the cutting head and the first outer element 21, the first and second guiding paths 38, 40 meet.

The second guiding path 40 has a circumferential extension, and its ends define the first and third positions of the cutting head. The path follower 36 engages with the second guiding path 40 when pivoting the inner element 19 in relation to the first outer element 21 is guided to be performed about the second axis 18. Due to the engagement between the path follower 36 and the second guiding path 40, the degree of freedom of the abutting journaling surfaces of the first outer element 21 in the first outer element 21 is limited to pivoting the cutting head 12 about the second pivot axis 18.

In the illustrated embodiments, the second guiding path 40 forms a groove in the inner element 19 and the path follower 36 extends into the groove. Again, the term guiding path also encompasses a circumferentially extending protrusion on the inner element 19.

Again, the cutting head is releasably lockable in relation to the shaft portion in each of the first position, the second position, and the third position. In the illustrated embodiments, the path follower 36 is releasably lockable at respective ends of the first guiding path 38, i.e. when the cutting head is in the first and second position, respectively, and at respective ends of the second guiding path 40, i.e. when the cutting head is in its first and third position, respectively.

In **Figs. 6b and 6c** the inner and first outer elements 19, 21 are shown in a position corresponding to the cutting head being positioned in its first position. In **Fig. 6d** the inner element 19 is shown in a position corresponding to the cutting head being positioned in its second position. In **Fig. 6e** the inner element 19 is shown in a position corresponding to the cutting head being positioned in its third position.

As discussed above, the path follower 36 guides pivoting of the first outer element 21 and the cutting head about the first pivot axis 10. In order to permit such pivoting from the first position towards the second position, the path follower 36 is released from a locking engagement, and the first outer element 21 is pivoted in relation to the inner element 19 with the path follower 36 following along the first guiding path 38. In order to permit pivoting from the first position towards the third position, again, the path follower 36 is released from a locking engagement and then the first outer element 21 is pivoted in relation to the inner element 19 with the path follower 36 following along the second guiding path 40. Releasing the path follower 36 from the respective second and third positions permits the first outer element 21 and the cutting head to be pivoted back to the first position.

The path follower 36 is movable in a direction comprising a normal direction of the first spherical plane. In this manner, the path follower 36 may be released from a locking engagement at each of the first, second, and third positions of the cutting head and the first outer element 21.

In these embodiments, locking engagement may be provided by the path follower 36 being biased inwardly of the first spherical plane, and the inner element 19 being provided with the recesses at each end of the first and second guiding paths 38, 40. Thus, the path follower 36 engages with the recesses at each end of the first and second guiding paths 38, 40 and the corresponding first, second, and third positions of the cutting head and the first outer element 21.

A manoeuvring arrangement 72 is configured to move the path follower 36 in the direction comprising the normal direction of the first spherical plane. The path follower 36 is biased via a spring 70. The path follower 36 is manoeuvrable via the manoeuvring arrangement 72, which comprising an actuating bar 74 attached to the path follower 36, see **Fig. 6b**. A user of the hand-held cutting device actuates the actuating bar 74 against the force of the spring 70 in an outward direction from the first spherical plane to release the locking engagements of the path follower 36. In this position, the path follower 36 is arranged at a height at which it is still engaged with the first and second guiding paths in order to provide the first and second pivot axes 10, 18 as discussed above.

Thus, in these embodiments, the manoeuvring arrangement 72 is provided for the releasable locking of the cutting head 12 in the first, second, and third position, respectively.

As in the first and embodiments, the centre of gravity of the cutting head may be positioned laterally of the first pivot axis 10 when the cutting head is in the first position and the handle portion and shaft potion are held in a normal operating position. Thus, again gravity assists pivoting of the cutting head towards the second position when a user actuates, in this case, the manoeuvring arrangement 72.

It is to be understood that the foregoing is illustrative of various example embodiments and that the invention is defined only by the appended claims. A person skilled in the art will realize that the example embodiments may be modified in the limits of the wording of the appended claims.

For instance, with reference to the illustrated embodiments with the inner element 19 connected to the shaft portion 6, and the second outer element 24 or the first outer element 21 is connected to the cutting head 12. In alternative embodiments, the inner element may instead be connected to the cutting head 12, whereas the second outer element or the first outer element may be connected to the shaft portion 6.

## Claims

1. A hand-held cutting device (2) comprising a handle portion (4), a shaft portion (6), a journaling member (8) providing a first pivot axis (10), and a cutting head (12), wherein
the cutting head (12) comprises a motor and an attachment means (13) configured for connecting thereto a cutting means (14), the motor (16) being arranged for driving the attachment means (13) and the cutting means (14), wherein
the cutting head (12) is connected to the shaft portion (6) via the journaling member (8), wherein
the cutting head (12) is pivotable about the first pivot axis (10) between a first position and a second position in relation to the shaft portion (6), and wherein
the journaling member (8) provides a second pivot axis (18), the cutting head (12) being pivotable about the second pivot axis (18) between the first position and a third position in relation to the shaft portion (6),
the journaling member (8) comprises an inner element (9), wherein
the inner element (19) comprises a first convex surface (20) and the first outer element (21) comprises a first concave surface (22), and wherein the first convex surface (20) and the first concave surface (22) form abutting journaling surfaces arranged in a first spherical plane,
**characterised in that**
the journaling member (8) comprises a second outer element (24),
wherein the first outer element (21) comprises a second convex surface (25) and the second outer element (24) comprise a second concave surface (26) forming abutting journaling surfaces arranged in a second spherical plane, and wherein the second spherical plane is arranged outside and concentrically with the first spherical plane.

2. The hand-held cutting device (2) according to claim 1, wherein the first pivot axis (10) crosses the second pivot axis (18) within the journaling member (8).

3. The hand-held cutting device (2) according to claim 1 or 2, wherein the first convex surface (20) and the first concave surface (22) forming abutting journaling surfaces journal the inner element (19) in the first outer element (21) for pivoting the cutting head (12) about the first pivot axis (10).

4. The hand-held cutting device (2) according to any one of claims 1 - 3, wherein the inner element (19) is provided with a journaling protrusion (32) extending from the first convex surface (20), wherein the first outer element (21) is provided with a journaling opening (34), or wherein
the inner element (19) is provided with a journaling opening and the first outer element (21) is provided with a journaling protrusion extending from the first concave surface (22), and wherein
the journaling protrusion (32) extends into the journaling opening (34) to provide the first pivot axis (10) for pivoting of the cutting head (12) between the first and second positions.

5. The hand-held cutting device (2) according to any one of the preceding claims, comprising a protruding member (28) arranged partially inside the inner element (19) and extending partially out of the inner element (19), wherein the first outer element (24) is provided with a first groove (30) and a second groove (31), and wherein the protruding member (28) is configured for engaging with the first groove (30) for releasably locking the cutting head (12) in the first position and for engaging with the second groove (31) for releasably locking the cutting head (12) in the second position.

6. The hand-held cutting device (2) according to any one of the preceding claims, wherein the first outer element (21) at the second convex surface (24) is provided with at least two protrusions (33, 33') and/or recesses, wherein the cutting head (12) comprises an engagement member (35), and wherein the engagement member (35) is configured for engaging with a first of the at least two protrusions (33, 33') and/or recesses for releasably locking the cutting head (12) in the first position and for engaging with a second of the at least two protrusions (33, 33') and/or recesses for releasably locking the cutting head (12) in the third position.

7. The hand-held cutting device (2) according to any one of the preceding claims, wherein the first convex surface (20) and the first concave surface (22) forming abutting journaling surfaces journal the inner element (19) in the first outer element (21) for pivoting about the second pivot axis (18).

8. The hand-held cutting device (2) according to claim 7, comprising a path follower (36) extending from the first outer element (21) towards the inner element (19), wherein the inner element (19) is provided with a first guiding path (38), and wherein the path follower (36) and the first guiding path (38) are configured for interacting with each other for guiding a pivoting of the cutting head (12) about the first pivot axis (10) between the first and second positions .

9. The hand-held cutting device (2) according to claim 8, comprising a track follower (27) arranged partially inside the inner element (19) and extending partially out of the inner element (19), wherein the first outer element (21) is provided with a guiding track (29), and wherein the track follower (27) and the guiding track (29) are configured for interacting with each other for guiding a pivoting of the cutting head (12) about the second pivot axis (18) between the first and third positions.

10. The hand-held cutting device (2) according to claim 9, wherein the inner element (19) is provided with a second guiding path (40), and wherein the path follower (36) and the second guiding path (40) are configured for interacting with each other for guiding a pivoting of the cutting head (12) about the second pivot axis (18) between the first and third positions.

11. The hand-held cutting device (2) according to any one of the preceding claims, wherein the cutting head (12) is releasably lockable in relation to the shaft portion (6) in each of the first position, the second position, and the third position.

12. The hand-held cutting device (2) according to claim 11, wherein a centre of gravity (62) of the cutting head (12) is positioned laterally of the first pivot axis (10) when the cutting head (12) is in the first position and the handle portion (4) and shaft potion (6) are held in a normal operating position, such that when released from the first position, gravity initiates at least a partial rotation of the cutting head (12) about the first pivot axis (10) towards the second position.

13. The hand-held cutting device (2) according to claim 7, wherein the track follower (27) is manoeuvrable by a user of the hand-held cutting device (2) via a first manoeuvring mechanism (43) arranged at least partially in the shaft portion (6).

## Patentansprüche

1. Ein handgehaltenes Schneidegerät (2) umfasst ein Griffteil (4), ein Schaftteil (6), ein eine erste Schwenkachse (10) bildendes Lagerteil (8) und einen Schneidkopf (12), wobei
der Schneidkopf (12) einen Motor und ein Befestigungsmittel (13) umfasst, das so ausgebildet ist, dass es mit einem Schneidmittel (14) verbunden werden kann, wobei der Motor (16) zum Antreiben des Befestigungsmittels (13) und des Schneidmittels (14) angeordnet ist, wobei
der Schneidkopf (12) über das Lagerteil (8) mit dem Schaftteil (6) verbunden ist, wobei der Schneidkopf (12) um die erste Schwenkachse (10) zwischen einer ersten Position und einer zweiten Position in Bezug auf den Schaftabschnitt (6) schwenkbar ist, und wobei das Lagerteil (8) eine zweite Schwenkachse (18) aufweist, wobei der Schneidkopf (12) um die zweite Schwenkachse (18) zwischen der ersten Position und einer dritten Position in Bezug auf den Schaftabschnitt (6) schwenkbar ist,
das Lagerteil (8) ein inneres Element (19) umfasst, wobei
das innere Element (19) eine erste konvexe Fläche (20) und das erste äußere Element (21) eine erste konkave Fläche (22) aufweist, und wobei die erste konvexe Fläche (20) und die erste konkave Fläche (22) aneinanderstoßende Lagerflächen bilden, die in einer ersten sphärischen Ebene angeordnet sind,
**dadurch gekennzeichnet, dass**
das Lagerelement (8) ein zweites äußeres Element (24) umfasst, wobei das erste äußere Element (21) eine zweite konvexe Fläche (25) und das zweite äußere Element (24) eine zweite konkave Fläche (26) umfasst, die aneinanderstoßende Lagerflächen bilden, die in einer zweiten sphärischen Ebene angeordnet sind, und wobei die zweite sphärische Ebene außerhalb und konzentrisch zu der ersten sphärischen Ebene angeordnet ist.

2. Das handgehaltene Schneidegerät (2) nach Anspruch 1, wobei die erste Schwenkachse (10) die zweite Schwenkachse (18) innerhalb des Lagerteils (8) kreuzt.

3. Das handgehaltene Schneidegerät (2) nach Anspruch 1 oder 2, wobei die erste konvexe Fläche (20) und die erste konkave Fläche (22) aneinanderstoßende Lagerflächen des inneren Elements (19) in dem ersten äußeren Element (21) bilden, um den Schneidkopf (12) um die erste Schwenkachse (10) zu schwenken.

4. Das handgehaltene Schneidegerät (2) nach einem der Ansprüche 1 bis 3, wobei das innere Element (19) mit einem Lagervorsprung (32) versehen ist, der sich von der ersten konvexen Fläche (20) aus erstreckt, wobei das erste äußere Element (21) mit einer Lageröffnung (34) versehen ist, oder wobei
das innere Element (19) mit einer Lageröffnung versehen ist und das erste äußere Element (21) mit einem Lagervorsprung versehen ist, der sich von der ersten konkaven Oberfläche (22) erstreckt, und wobei
der Lagervorsprung (32) sich in die Lageröffnung (34) erstreckt, um die erste Schwenkachse (10) zum Schwenken des Schneidkopfes (12) zwischen der ersten und der zweiten Position zu bilden.

5. Das handgehaltene Schneidegerät (2) nach einem der vorhergehenden Ansprüche, umfassend ein vorstehendes Element (28), das teilweise innerhalb des inneren Elements (19) angeordnet ist und sich teilweise aus dem inneren Element (19) heraus erstreckt, wobei das erste äußere Element (24) mit einer ersten Nut (30) und einer zweiten Nut (31) versehen ist, und wobei das vorstehende Element (28) so ausgebildet ist, dass es in die erste Nut (30) eingreift, um den Schneidkopf (12) in der ersten Position lösbar zu verriegeln, und dass es in die zweite Nut (31) eingreift, um den Schneidkopf (12) in der zweiten Position lösbar zu verriegeln.

6. Das handgehaltene Schneidegerät (2) nach einem der vorhergehenden Ansprüche, wobei das erste äußere Element (21 ) an der zweiten konvexen Oberfläche (24) mit mindestens zwei Vorsprüngen (33, 33') und/oder Ausnehmungen versehen ist, wobei der Schneidkopf (12) ein Eingriffselement (35) aufweist, und wobei das Eingriffselement (35) so ausgebildet ist, dass es mit einem ersten der mindestens zwei Vorsprünge (33, 33') und/oder Ausnehmungen in Eingriff kommt, um den Schneidkopf (12) in der ersten Position lösbar zu verriegeln, und dass es mit einem zweiten der mindestens zwei Vorsprünge (33, 33') und/oder Ausnehmungen in Eingriff kommt, um den Schneidkopf (12) in der dritten Position lösbar zu verriegeln.

7. Das handgehaltene Schneidegerät (2) nach einem der vorhergehenden Ansprüche, wobei die erste konvexe Fläche (20) und die erste konkave Fläche (22) aneinanderstoßende Lagerflächen bilden, an denen das innere Element (19) im ersten äußeren Element (21) um die zweite Schwenkachse (18) schwenkbar gelagert ist.

8. Das handgehaltene Schneidegerät (2) nach Anspruch 7, umfassend einen Pfadfolger (36), der sich von dem ersten äußeren Element (21 ) in Richtung des inneren Elements (19) erstreckt, wobei das innere Element (19) mit einem ersten Führungspfad (38) versehen ist, und wobei der Pfadfolger (36) und der erste Führungspfad (38) so ausgebildet sind, dass sie miteinander zusammenwirken, um ein Schwenken des Schneidkopfs (12) um die erste Schwenkachse (10) zwischen der ersten und der zweiten Position zu führen.

9. Das handgehaltene Schneidegerät (2) nach Anspruch 8, umfassend einen Spurnachläufer (27), der teilweise innerhalb des inneren Elements (19) angeordnet ist und sich teilweise aus dem inneren Element (19) heraus erstreckt, wobei das erste äußere Element (21 ) mit einer Führungsspur (29) versehen ist, und wobei der Spurnachläufer (27) und die Führungsspur (29) so ausgebildet sind, dass sie miteinander zusammenwirken, um ein Schwenken des Schneidkopfs (12) um die zweite Schwenkachse (18) zwischen der ersten und der dritten Position zu führen.

10. Das handgehaltene Schneidegerät (2) nach Anspruch 9, wobei das innere Element (19) mit einem zweiten Führungspfad (40) versehen ist, und wobei der Pfadfolger (36) und der zweite Führungspfad (40) so ausgebildet sind, dass sie miteinander zusammenwirken, um ein Schwenken des Schneidkopfes (12) um die zweite Schwenkachse (18) zwischen der ersten und der dritten Position zu führen.

11. Das handgehaltene Schneidegerät (2) nach einem der vorhergehenden Ansprüche, wobei der Schneidkopf (12) in Bezug auf den Schaftabschnitt (6) in jeder der ersten Position, der zweiten Position und der dritten Position lösbar verriegelbar ist.

12. Das handgehaltene Schneidegerät (2) nach Anspruch 11, wobei ein Schwerpunkt (62) des Schneidkopfes (12) seitlich der ersten Schwenkachse (10) positioniert ist, wenn sich der Schneidkopf (12) in der ersten Position befindet und der Griffabschnitt (4) und das Schaftteil (6) in einer normalen Betriebsposition gehalten werden, so dass beim Loslassen aus der ersten Position die Schwerkraft zumindest eine teilweise Drehung des Schneidkopfes (12) um die erste Schwenkachse (10) in Richtung der zweiten Position einleitet.

13. Das handgehaltene Schneidegerät (2) nach Anspruch 7, wobei der Spurnachläufer (27) durch einen Benutzer des handgehaltenen Schneidgeräts (2) über einen ersten Manövriermechanismus (43), der zumindest teilweise in dem Schaftabschnitt (6) angeordnet ist, manövrierbar ist.

## Revendications

1. Outil de coupe portable (2) comprenant une partie poignée (4), une partie arbre (6), un élément d'axe (8) fournissant un premier axe de pivotement (10), et une tête de coupe (12), dans lequel
la tête de coupe (12) comprend un moteur et un moyen de fixation (13) configuré pour y connecter un moyen de coupe (14), le moteur (16) étant disposé pour entraîner le moyen de fixation (13) et le moyen de coupe (14), dans lequel
la tête de coupe (12) est reliée à la partie arbre (6) par l'intermédiaire de l'élément d'axe (8), dans lequel
la tête de coupe (12) peut pivoter autour du premier axe de pivotement (10) entre une première position et une deuxième position par rapport à la partie arbre (6), et dans lequel l'élément d'axe (8) fournit un second axe de pivotement (18), la tête de coupe (12) pouvant pivoter autour du second axe de pivotement (18) entre la première position et une troisième position par rapport à la partie arbre (6),
l'élément d'axe (8) comprend un élément intérieur (9), dans lequel
l'élément intérieur (19) comprend une première surface convexe (20) et le premier élément extérieur (21) comprend une première surface concave (22), et dans lequel la première surface convexe (20) et la première surface concave (22) forment des surfaces d'axe de butée disposées dans un premier plan sphérique,
**caractérisé en ce que** l'élément d'axe (8) comprend un second élément extérieur (24), dans lequel le premier élément extérieur (21) comprend une seconde surface convexe (25) et le second élément extérieur (24) comprend une seconde surface concave (26) formant des surfaces d'axe de butée disposées dans un second plan sphérique, et dans lequel le second plan sphérique est disposé à l'extérieur du premier plan sphérique et concentriquement à ce dernier.

2. Outil de coupe portable (2) selon la revendication 1, dans lequel le premier axe de pivotement (10) croise le second axe de pivotement (18) à l'intérieur de l'élément d'axe (8).

3. Outil de coupe portable (2) selon la revendication 1 ou 2, dans lequel la première surface convexe (20) et la première surface concave (22) forment des surfaces d'axe de butée contre l'élément intérieur (19) dans le premier élément extérieur (21) pour faire pivoter la tête de coupe (12) autour du premier axe de pivotement (10).

4. Outil de coupe portable (2) selon l'une quelconque des revendications 1 à 3, dans lequel l'élément intérieur (19) est pourvu d'une saillie d'axe (32) s'étendant à partir de la première surface convexe (20), dans lequel le premier élément extérieur (21) est pourvu d'une ouverture d'axe (34), ou dans lequel
l'élément intérieur (19) est pourvu d'une ouverture d'axe et le premier élément extérieur (21) est pourvu d'une saillie d'axe s'étendant à partir de la première surface concave (22), et dans lequel
la saillie d'axe (32) s'étend dans l'ouverture d'axe (34) pour fournir le premier axe de pivotement (10) pour faire pivoter la tête de coupe (12) entre la première et la deuxième position.

5. Outil de coupe portable (2) selon l'une quelconque des revendications précédentes, comprenant un élément en saillie (28) disposé partiellement à l'intérieur de l'élément intérieur (19) et s'étendant partiellement hors de l'élément intérieur (19), dans lequel le premier élément extérieur (24) est pourvu d'une première rainure (30) et d'une seconde rainure (31), et dans lequel l'élément en saillie (28) est configuré pour s'engager dans la première rainure (30) afin de bloquer de manière amovible la tête de coupe (12) dans la première position et pour s'engager dans la seconde rainure (31) afin de bloquer de manière amovible la tête de coupe (12) dans la deuxième position.

6. Outil de coupe portable (2) selon l'une quelconque des revendications précédentes, dans lequel le premier élément extérieur (21) au niveau de la seconde surface convexe (24) est pourvu d'au moins deux saillies (33, 33') et/ou évidements, dans lequel la tête de coupe (12) comprend un élément d'engagement (35), et dans lequel l'élément d'engagement (35) est configuré pour s'engager avec une première des au moins deux saillies (33, 33') et/ou évidements pour bloquer de manière amovible la tête de coupe (12) dans la première position et pour s'engager avec une seconde des au moins deux saillies (33, 33') et/ou évidements pour bloquer de manière amovible la tête de coupe (12) dans la troisième position.

7. Outil de coupe portable (2) selon l'une quelconque des revendications précédentes, dans lequel la première surface convexe (20) et la première surface concave (22) formant des surfaces d'axe de butée contre l'élément intérieur (19) dans le premier élément extérieur (21) pour le pivotement autour du second axe de pivotement (18).

8. Outil de coupe portable (2) selon la revendication 7, comprenant un suiveur de trajectoire (36) s'étendant du premier élément extérieur (21) vers l'élément intérieur (19), dans lequel l'élément intérieur (19) est pourvu d'une première trajectoire de guidage (38), et dans lequel le suiveur de trajectoire (36) et la première trajectoire de guidage (38) sont configurés pour interagir l'un avec l'autre afin de guider un pivotement de la tête de coupe (12) autour du premier axe de pivotement (10) entre la première et la deuxième position.

9. Outil de coupe portable (2) selon la revendication 8, comprenant un suiveur de piste (27) disposé partiellement à l'intérieur de l'élément intérieur (19) et s'étendant partiellement hors de l'élément intérieur (19), dans lequel le premier élément extérieur (21) est pourvu d'une piste de guidage (29), et dans lequel le suiveur de piste (27) et la piste de guidage (29) sont configurés pour interagir l'un avec l'autre afin de guider un pivotement de la tête de coupe (12) autour du second axe de pivotement (18) entre la première et la troisième position.

10. Outil de coupe portable (2) selon la revendication 9, dans lequel l'élément intérieur (19) est pourvu d'une seconde trajectoire de guidage (40), et dans lequel le suiveur de trajectoire (36) et la seconde trajectoire de guidage (40) sont configurés pour interagir l'un avec l'autre afin de guider un pivotement de la tête de coupe (12) autour du second axe de pivotement (18) entre la première et la troisième position.

11. Outil de coupe portable (2) selon l'une quelconque des revendications précédentes, dans lequel la tête de coupe (12) peut être bloquée de manière amovible par rapport à la partie arbre (6) dans la première position, la deuxième position et la troisième position.

12. Outil de coupe portable (2) selon la revendication 11, dans lequel un centre de gravité (62) de la tête de coupe (12) est positionné latéralement par rapport au premier axe de pivotement (10) lorsque la tête de coupe (12) est dans la première position et que la partie poignée (4) et la partie arbre (6) sont maintenues dans une position de fonctionnement normale, de sorte que lorsqu'elle est libérée de la première position, la gravité initie au moins une rotation partielle de la tête de coupe (12) autour du premier axe de pivotement (10) vers la deuxième position.

13. Outil de coupe portable (2) selon la revendication 7, dans lequel le suiveur de piste (27) peut être manoeuvré par un utilisateur de l'outil de coupe portable (2) par l'intermédiaire d'un premier mécanisme de manoeuvre (43) disposé au moins partiellement dans la partie arbre (6).
